# EUROPÄISCHE PATENTSCHRIFT

(11) **EP 2 820 258 B1**
(45) Veröffentlichungstag und Bekanntmachung des Hinweises auf die Patenterteilung: **12.04.2017**
(21) Anmeldenummer: 13706519.9
(22) Anmeldetag: 26.02.2013
(51) Int. Cl.: F01N 3/01

(54) **VORRICHTUNG ZUR BEHANDLUNG EINES VON EINEM ZENTRALBEREICH RADIAL NACH AUSSEN STRÖMENDEN GASSTROMS**
DEVICE FOR TREATING A GAS FLOW FLOWING RADIALLY OUTWARDS FROM A CENTRAL AREA
DISPOSITIF POUR TRAITER UN FLUX GAZEUX S'ÉCOULANT RADIALEMENT VERS L'EXTÉRIEUR D'UNE ZONE CENTRALE

(30) Priorität: 02.03.2012 DE 102012004270
(43) Veröffentlichungstag der Anmeldung: 07.01.2015
(73) Patentinhaber: Continental Automotive GmbH, 30165 Hannover (DE)
(72) Erfinder: HIRTH, Peter, 51503 Rösrath (DE); HODGSON, Jan, 53840 Troisdorf (DE); VORSMANN, Christian, 51105 Köln (DE)
(86) Internationale Anmeldenummer: PCT/EP2013/053840
(87) Internationale Veröffentlichungsnummer: WO 2013/127806

(56) Entgegenhaltungen:
- WO-A1-2011/029728
- FR-A1- 2 841 484
- FR-A1- 2 915 234
- JP-A- H03 262 551

## Beschreibung

Die vorliegende Erfindung betrifft die Behandlung eines Gasstromes, insbesondere eines Abgasstromes einer Verbrennungskraftmaschine, beispielsweise eines Kraftfahrzeugs. Solche Vorrichtungen werden im Allgemeinen zur Behandlung, insbesondere zur Reinigung von Gasströmen eingesetzt, wobei die vorliegende Erfindung hauptsächlich die Beseitigung von Partikeln, z. B. Rußpartikeln, aus dem Abgas eines Verbrennungsmotors, insbesondere eines Diesel-Motors, betrifft. Immer strenger werdende Grenzwerte für die Anzahl und die Masse an Rußpartikeln pro Abgasgewicht oder Abgasvolumen, die ein Kraftfahrzeug an die Umwelt abgeben darf, erfordern immer bessere Abgasreinigungssysteme.

Es gibt bereits zahlreiche unterschiedliche Konzepte zur Beseitigung von Rußpartikeln aus Abgasen mobiler Verbrennungskraftmaschinen. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" bzw. "Elektrofilter" bekannt.

Bei "Elektrofiltern" werden durch die Bereitstellung eines elektrischen Feldes und/oder eines Plasmas eine Agglomeration von kleinen Rußpartikeln zu größeren Rußpartikeln und/oder eine elektrische Ladung bei Rußpartikeln bewirkt. Elektrisch geladene Rußpartikel und/oder größere Rußpartikel sind regelmäßig in einem Filtersystem deutlich einfacher abzuscheiden. Rußpartikel-Agglomerate werden aufgrund ihrer größeren Massenträgheit in einer Abgasströmung träger transportiert und lagern sich an Umlenkstellen einer Abgasströmung somit einfacher ab. Elektrisch geladene Rußpartikel werden aufgrund ihrer Ladung hin zu Oberflächen gezogen, an welchen sie anlagern und ihre Ladung abgeben. Auch dies erleichtert die Entfernung von Rußpartikeln aus dem Abgasstrom im Betrieb von Kraftfahrzeugen. Auf diesem Gebiet liegt auch die vorliegende Erfindung.

Um Partikel in einem Abgas mit elektrischen Feldern zu beeinflussen, müssen sich die Partikel eine gewisse Zeit in dem elektrischen Feld aufhalten bzw. sich durch dieses hindurchbewegen. Bei den aus geometrischen Gründen typischerweise verwendeten elektrischen Feldern in Strömungsrichtung bzw. entgegen der Strömungsrichtung des Abgases kann nicht immer eine hohe Ionisationswahrscheinlichkeit für durchströmende Partikel erreicht werden.

Die FR 2 915 234 A1 offenbart einen elektrostatischen Filter mit einer zentralen Stabelektrode, die von einer porösen Gegenelektrode umgeben ist. Die in dem Feld zwischen Stabelektrode und Gegenelektrode ionisierten Partikel agglomerieren an der Gegenelektrode und werden von dort wieder losgerissen. Abgelagerte Partikel werden im Bereich einer elektrisch isolierten Durchführung durch Veränderung des elektrischen Felds mit Hilfe einer Schutzvorrichtung abgebrannt.

Aufgabe der vorliegenden Erfindung ist es, die mit Bezug auf den Stand der Technik auftretenden Probleme zu lindern oder lösen, wobei insbesondere eine Anordnung zur Behandlung eines Gasstromes angegebene werden soll, bei der der zu behandelnde Gasstrom im Wesentlichen senkrecht zu einem elektrischen Feld strömt.

Diese Aufgabe wird gelöst durch eine Vorrichtung gemäß dem Anspruch 1. Vorteilhafte Ausgestaltungen sind in den abhängigen Ansprüchen angegeben. Es ist darauf hinzuweisen, dass die in Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Die erfindungsgemäße Vorrichtung zur Behandlung eines Abgasstroms einer Verbrennungskraftmaschine weist mindestens einen von dem Gasstrom radial durchströmbaren Radialraum auf, der sich (im Wesentlichen) radial von einem Zentralbereich zu einem äußeren Sammelraum erstreckt, wobei der Radialraum von einer ersten (etwa) scheibenförmigen Wand und einer zweiten (etwa) scheibenförmigen Wand begrenzt wird und wobei aus der ersten Wand eine Vielzahl von in den Radialraum gerichteten Elektroden hervorsteht.

"Radial" wird hier so verstanden, dass die Richtung in etwa senkrecht (z. B. auch +/- 15° Abweichung) zu einer Zentralachse der Vorrichtung verläuft. Hierbei ist insbesondere gemeint, dass der Gasstrom im Wesentlichen entlang der Zentralachse in der Vorrichtung strömt und/oder in diese ein/ausströmt und dann seitlich/quer umgelenkt wird. Der Radialraum ist insbesondere um einen Abschnitt der Zentralachse herum ausgebildet. Der Radialraum kann sich auch radial erweitern und/oder verengen, bevorzugt ist aber eine (im Wesentlichen) gleiche Beabstandung der beiden Wände zueinander in radialer (und umfänglicher) Richtung. Insbesondere ist mit der (etwa) scheibenförmigen Ausgestaltung der Wände gemeint, dass diese flach sind, insbesondere auch rund. Damit wird insbesondere ein sich in radialer Richtung und mit gleicher Breite sich in Umfangsrichtung um die Zentralachse/den Zentralraum herum erstreckender Radialraum gebildet.

Auf diese Weise lässt sich zwischen den Elektroden, die insbesondere nur an der ersten Wand vorgesehen sind, und der zweiten Wand (insbesondere ohne Elektroden) ein elektrisches Feld aufbauen, welches von dem zu behandelnden Gasstrom quer zur Feldrichtung durchströmt wird. Die Umlenkung des Gasstroms und/oder der gegenüber dem Zentralbereich vergrößerte Strömungsquerschnitt kann den Gasstrom verlangsamen. Durch den Radialraum strömende Partikel sind über einen längeren Zeitraum einem etwa gleichbleibenden elektrischen Feld bzw. einem Strom von Elektronen ausgesetzt und es besteht immer wieder die Möglichkeit für eine Ionisation auf dem Weg von innen nach außen.

Bevorzugt verlaufen die erste scheibenförmige Wand und die zweite scheibenförmige Wand (im Wesentlichen) parallel zueinander, wodurch die Geschwindigkeit des Gasstroms von innen nach außen abnimmt, während die das elektrische Feld mit bestimmenden Abstände zwischen den Elektroden und der zweiten Wand in etwa gleich bleiben.

In einer bevorzugten Ausführung ist die erste scheibenförmige Wand aus einem elektrisch isolierenden Material gebildet mit darin befestigten elektrisch leitfähigen Elektroden, die untereinander durch ein in oder an dem elektrisch isolierenden Material verlaufende elektrische Leiter elektrisch verbunden sind. Auf diese Weise können alle Elektroden auf das gleiche elektrische Potential gebracht werden. Bevorzugt sind die Elektroden nach Art von Stiften mit 0,1 bis 3 mm [Millimeter], vorzugsweise etwa 1mm, in den Radialraum ragenden Spitzen. Diese Spitzen können zu sogenannten Corona-Entladungen führen, wenn ein genügend starkes elektrisches Feld aufgebaut wird. Bei weiter erhöhter Spannung kommt es zu Plasmaentladungen, die ebenfalls bei der vorliegenden Erfindung angewendet werden können.

Je nach Volumenstrom pro Zeiteinheit des zu behandelnden Abgases/Gasstroms können erfindungsgemäß zwei oder mehr parallel verlaufende Radialräume axial aufeinanderfolgend um den Zentralbereich angeordnet sein. Das Abgas wird dann von dem Zentralbereich aus in die verschiedenen Radialräume verteilt, wobei die einzelnen Radialräume im Wesentlichen gleichartig ausgebildet sind. Bevorzugt hierbei sind Ausgestaltungen mit bis zu maximal 20 Ringräumen, insbesondere mit 2, 3, 4, 5 oder 6 Radialräumen.

Bevorzugt ist weiterhin, dass sich die Dichte der Elektroden pro Flächeneinheit auf der ersten Wand in radialer Richtung ändert, insbesondere von innen nach außen abnimmt. Die Dichte der Elektroden pro Flächeneinheit, z.B. 0,1 bis 5 pro cm² [Quadratzentimeter] auf der ersten Wand kann konstant sein. Wenn man jedoch berücksichtigt, dass die Geschwindigkeit des Gasstroms im Radialraum innen größer als außen ist, so kann auch eine Anpassung der Dichte der Elektroden pro Flächeneinheit an die Strömungsgeschwindigkeit erfolgen, die Dichte der Elektroden also von innen nach außen geringer werden. Es gibt jedoch auch Anwendungen, bei denen gerade langsamer strömendes Abgas intensiver behandelt werden soll, was durch eine nach außen zunehmende Elektrodendichte erreicht werden kann.

Für den Betrieb der Vorrichtung ist erfindungsgemäß vorgesehen, dass die Elektroden und die zweite scheibenförmige Wand mit einer Hochspannungsquelle verbindbar sind, so dass ein elektrisches Feld zwischen den Elektroden und der zweiten Wand erzeugbar ist. Dabei kann insbesondere die zweite Wand aus einem elektrisch leitenden Werkstoff, insbesondere Metall, hergestellt sein und bevorzugt elektrisch mit Masse, beispielsweise über ein Gehäuse, verbunden sein. An die Elektroden wird dann vorzugsweise eine negative Hochspannung angelegt, so dass diese als Kathoden wirken.

Bei einem bevorzugten Ausführungsbeispiel der Erfindung sind alle Radialräume um eine gemeinsame mit in die Radialräume mündenden Innenöffnungen versehene zentrale Gaszuführung angeordnet und außen von einem gemeinsamen Gehäuse umgeben sind, welches den Sammelraum begrenzt. Bevorzugt ist der Sammelraum dann mit der Ableitung (direkt) verbunden. Das heißt mit anderen Worten insbesondere, dass alle Radialräume um eine gemeinsame zentrale Gaszuführung angeordnet sind, die in die Radialräume mündende Öffnungen aufweist. Im einfachsten Fall kann es sich um ein in Höhe der jeweiligen Radialräume mit Löchern versehenes Rohr handeln. Außerdem sind die Radialräume außen mit einem Abstand von einem gemeinsamen Gehäuse umgeben, welches den Sammelraum begrenzt, wobei der Sammelraum vorzugsweise mit einer Ableitung verbunden ist, durch die das behandelte Gas abgeleitet wird, insbesondere zur weiteren Behandlung.

Bei einem Ausführungsform der Erfindung sind die jeweils erste und die zweite Wand von zwei oder mehr Radialräumen in einer gemeinsamen (im Wesentlichen) zylindrischen Halterung angeordnet, die eine sichere Halterung und einen gleichbleibenden Abstand sicherstellt. Insbesondere sind die erste Wand und zweite Wand jeweils in abwechselnder Konstellation angeordnet, so dass zwei (2) erste Wände oder zwei (2) zweite Wände zusammen als eine gemeinsame erste Wand bzw. zweite Wand ausgebildet sind. Zwei benachbarte Radialräume sind dadurch quasi spiegelsymmetrisch zu einer gemeinsamen Wand zwischen diesen beiden Radialräumen ausgebildet. Die Frage, ob zwei Rücken an Rücken aneinander liegende gleichartige Wände zu einer zusammengefasst werden oder nicht, ist nach konstruktiven und fertigungstechnischen Gesichtspunkten zu entscheiden. Für die zweiten Wände wird im Allgemeinen eine gemeinsame Wand sinnvoll sein, bei aneinander liegenden ersten Wänden hängt dies von fertigungstechnischen Gesichtspunkten und eventuell den zu beherrschenden thermischen Dehnungen ab.

Auch die elektrische Zuleitung zu den Elektroden kann erfindungsgemäß auf unterschiedlichen Wegen erfolgen.

So ist bevorzugt, dass mindestens eine elektrische Zuleitung der Elektroden elektrisch isoliert durch das Gehäuse nach außen geführt ist.

Weiterhin wird vorgeschlagen, dass alle zweiten Wände mit (elektrischer) Masse verbindbar sind, (insbesondere) indem sie elektrisch mit der zentralen Gaszuführung und/oder dem Gehäuse verbunden sind.

Bevorzugt wird eine im Wesentlichen radiale, elektrisch isolierende Durchführung durch das Gehäuse, wobei die Elektroden von mehreren ersten Wänden entweder im Inneren des Gehäuses untereinander verbunden werden können oder mit getrennten durch das Gehäuse führenden Zuleitungen versehen sein können. Alternativ wird eine elektrische Zuleitung in axialer Richtung, also parallel zur zentralen Gaszuführung, vorgeschlagen, bei welcher die elektrisch isolierende Durchführung durch ein metallisches Gehäuse entfällt oder jedenfalls vereinfacht ist, weil die elektrische Zuleitung senkrecht aus der ersten Wand herausgeführt werden kann.

Die zweite Wand kann ebenfalls über elektrische Zuleitungen an eine Spannungsquelle angeschlossen werden, ist jedoch bevorzugt, wie bereits erwähnt, über zu ihrer Halterung ohnehin vorhandene Bauteile elektrisch mit dem Gehäuse und bevorzugt mit der Masse eines Fahrzeugs verbunden.

Weitere bevorzugte Ausgestaltungen der Erfindung und Ausführungsbeispiele, auf die diese jedoch nicht beschränkt ist, werden anhand der Zeichnung näher erläutert. Es zeigt:
- Fig. 1:: einen schematischen Längsschnitt durch eine erfindungsgemäße Behandlungsvorrichtung,
- Fig. 2:: einen Längsschnitt durch ein anderes Ausführungsbeispiel, und
- Fig. 3:: einen Querschnitt durch einen Radialraum aus Fig. 1 entlang der Linie III-III.

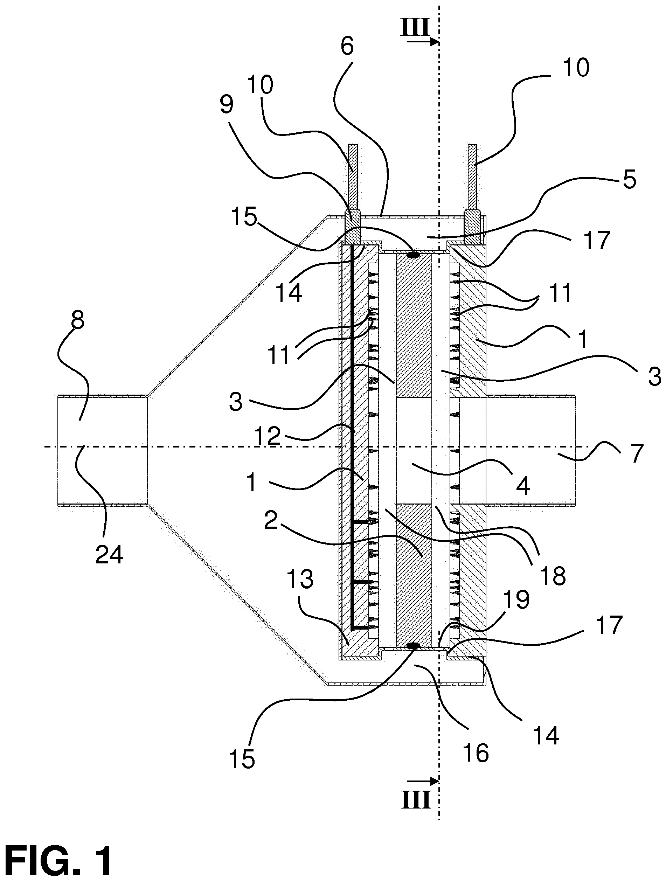

Fig. 1 zeigt ein Ausführungsbeispiel einer erfindungsgemäßen Behandlungsvorrichtung. Dieses Ausführungsbeispiel enthält zwei spiegelsymmetrisch zueinander angeordnete erste Wände 1 und Radialräume 3, wobei eine gemeinsame zweite Wand 2 zwischen den Radialräumen 3 angeordnet ist. Das zu behandelnde Gas wird über eine zentrale Gaszuführung 7 einem Zentralbereich 4 (entlang einer Zentralachse 24) zugeführt, von dem es durch Innenöffnungen 18 in die Radialräume 3 strömt. Außen strömt das Gas durch Außenöffnungen 19 in einen Sammelraum 5, der von einem Gehäuse 6 begrenzt wird. In dem Gehäuse 6 wird das Gas zu einer Ableitung 8 geführt, die vorzugsweise mit der zentralen Gaszuführung 7 fluchtend angeordnet ist. Auf diese Weise kann die gesamte Vorrichtung ähnlich zu anderen Behandlungsvorrichtungen in ein Abgassystem leicht eingebaut werden. Jeder Radialraum 3 ist von einer ersten Wand 1 und einer zweiten Wand 2 begrenzt, wobei die erste Wand 1 Elektroden 11 aufweist, die über elektrische Leiter 12 elektrisch miteinander verbunden sind. Die elektrischen Leiter 12 verlaufen, beispielsweise in Gestalt eines Gitters, innerhalb der ersten Wand 1 oder an deren Oberfläche, wobei die erste Wand 1 vorzugsweise aus elektrisch isolierendem Material 13 gebildet ist. Elektrische Leiter 12 und Elektroden 11 können insbesondere in dieses elektrisch isolierende Material 13 eingegossen sein. Über mindestens eine radiale elektrische Zuleitung 10, die mittels einer elektrisch isolierten Durchführung 9 durch das Gehäuse 6 nach außen geführt ist, sind die Elektroden 11 und die elektrischen Leiter 12 mit einer hier nicht dargestellten Hochspannungsquelle verbindbar.

Die beiden ersten Wände 1 und die zweite Wand 2 sind im vorliegenden Ausführungsbeispiel mittels einer zylindrischen Halterung 14 in festen Abständen zueinander gehalten. Die zweite Wand 2 kann dabei vorzugsweise mittels Schweißverbindungen 15 an der zylindrischen Halterung 14 befestigt sein, während die ersten Wände 1 durch jeweils mindestens einen Stützabsatz 17 mit Abstand zu der zweiten Wand 2 gehaltert sind. Dieser Bereich der zylindrischen Halterung 14 ist wegen der unterschiedlichen thermischen Dehnungen von Metall und Keramik als Dehnungsausgleich 16 gestaltet.

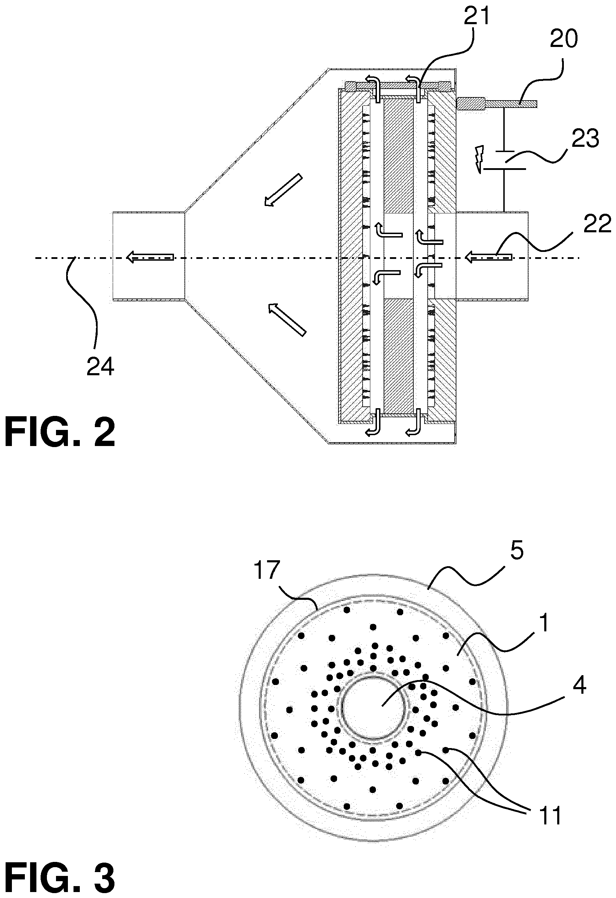

Fig. 2 zeigt im Wesentlichen die gleiche Anordnung wie Fig. 1 nur mit unterschiedlicher elektrischer Zuleitung 20 und einer internen elektrischen Verbindung 21 zwischen den elektrischen Leitern 12 in den beiden ersten Wänden 1. Außerdem ist der Gasstrom 22 durch Pfeile veranschaulicht. Eine Hochspannungsquelle 23 dient der Versorgung der Elektroden mit Hochspannung.

Fig. 3 zeigt einen schematischen Querschnitt durch die Behandlungsvorrichtung und zwar mit Blick auf eine erste Wand 1 mit ihren Elektroden 11, wobei bei diesem Ausführungsbeispiel die Dichte der Elektroden 11 pro Flächeneinheit nach außen abnimmt.

Die vorliegende Erfindung kann auf einer in Strömungsrichtung relativ kurzen Baulänge eine sehr effektive Behandlung eines Abgases mit einem elektrischen Feld zur Ionisierung oder Erzeugung eines Plasmas bereitstellen. Durch quer zur Strömungsrichtung verlaufende elektrische Felder ergeben sich neue Möglichkeiten bei der Wahl verschiedener Parameter der Behandlungsvorrichtung.

### Bezugszeichenliste

- 1: erste Wand
- 2: zweite Wand
- 3: Radialraum
- 4: Zentralbereich
- 5: Sammelraum
- 6: Gehäuse
- 7: zentrale Gaszuführung
- 8: Ableitung
- 9: elektrisch isolierte Durchführung
- 10: radiale elektrische Zuleitung
- 11: Elektroden
- 12: elektrische Leiter
- 13: elektrisch isolierendes Material
- 14: zylindrische Halterung
- 15: Schweißverbindung
- 16: Dehnungsausgleich
- 17: Stützabsatz
- 18: Innenöffnungen
- 19: Außenöffnungen
- 20: axiale elektrische Zuleitung
- 21: Verbindungsleitung
- 22: Gasströmung
- 23: Hochspannungsquelle
- 24: Zentralachse

## Patentansprüche

1. Vorrichtung zur Behandlung eines Abgasstromes (22) einer Verbrennungskraftmaschine mit mindestens einem von dem Abgasstrom (22) radial durchströmbaren Radialraum (3), der sich radial von einem Zentralbereich (4) zu einem äußeren Sammelraum (5) erstreckt, wobei der Radialraum (3) von einer ersten scheibenförmigen Wand (1) und einer zweiten scheibenförmigen Wand (2) begrenzt wird, wobei aus der ersten Wand (1) eine Vielzahl von in den Radialraum (3) gerichteten Elektroden (11) hervorsteht, **dadurch gekennzeichnet, dass** die Elektroden (11) und die zweite scheibenförmige Wand (2) mit einer Hochspannungsquelle (23) verbindbar sind, so dass ein elektrisches Feld zwischen den Elektroden (11) und der zweiten Wand (2) erzeugbar ist.

2. Vorrichtung nach Anspruch 1, **dadurch gekennzeichnet, dass** die erste scheibenförmige Wand (1) und zweite scheibenförmige Wand (2) parallel zueinander verlaufen.

3. Vorrichtung nach Anspruch 1 oder 2, **dadurch gekennzeichnet, dass** die erste scheibenförmige Wand (1) aus einem elektrisch isolierenden Material (13) gebildet ist mit darin befestigten elektrisch leitfähigen Elektroden (11), die untereinander durch in oder an dem elektrisch isolierenden Material (11) verlaufende elektrische Leiter (12) elektrisch verbunden sind.

4. Vorrichtung nach einem der vorhergehenden Ansprüche, **dadurch gekennzeichnet, dass** zwei oder mehr parallel verlaufende Radialräume (3) axial aufeinander folgend um den Zentralbereich (4) angeordnet sind.

5. Vorrichtung nach einem der vorhergehenden Ansprüche, **dadurch gekennzeichnet, dass** die Dichte der Elektroden (11) pro Flächeneinheit auf der ersten Wand (1) sich in radialer Richtung ändert.

6. Vorrichtung nach einem der vorhergehenden Ansprüche, **dadurch gekennzeichnet, dass** alle Radialräume (3) um eine gemeinsame mit in die Radialräume mündenden Innenöffnungen (18) versehene zentrale Gaszuführung (7) angeordnet sind und außen von einem gemeinsamen Gehäuse (6) umgeben sind, welches den Sammelraum (5) begrenzt.

7. Vorrichtung nach einem der vorhergehenden Ansprüche, **dadurch gekennzeichnet, dass** die jeweils erste Wand (1) und die zweite Wand (2) von zwei oder mehr Radialräumen (3) in einer gemeinsamen zylindrischen Halterung (14) angeordnet sind, so dass zwei erste Wände (1) oder zwei zweite Wände (2) zusammen als eine gemeinsame erste Wand (1) bzw. zweite Wand (2) ausgebildet sind.

8. Vorrichtung nach einem der Ansprüche 6 oder 7, **dadurch gekennzeichnet, dass** mindestens eine elektrische Zuleitung (10) der Elektroden (11) elektrisch isoliert durch das Gehäuse (6) nach außen geführt ist.

9. Vorrichtung nach einem der Ansprüche 6 bis 8, **dadurch gekennzeichnet, dass** alle zweiten Wände (2) mit Masse verbindbar sind, indem sie elektrisch mit der zentralen Gaszuführung (7) und/oder dem Gehäuse (6) verbunden sind.

## Claims

1. Device for the treatment of an exhaust-gas stream (22) of an internal combustion engine, having at least one radial chamber (3) through which the exhaust-gas stream (22) can flow radially and which extends radially from a central region (4) to an outer collecting chamber (5), wherein the radial chamber (3) is delimited by a first disk-shaped wall (1) and a second disk-shaped wall (2), wherein a multiplicity of electrodes (11) that are directed into the radial chamber (3) project from the first wall (1), **characterized in that** the electrodes (11) and the second disk-shaped wall (2) can be connected to a high-voltage source (23) such that an electrical field can be generated between the electrodes (11) and the second wall (2).

2. Device according to Claim 1, **characterized in that** the first disk-shaped wall (1) and the second disk-shaped wall (2) run parallel to one another.

3. Device according to Claim 1 or 2, **characterized in that** the first disk-shaped wall (1) is formed from an electrically insulating material (13) with electrically conductive electrodes (11) fastened therein, which electrodes are electrically connected to one another by electrical conductors (12) that run in or on the electrically insulating material (11).

4. Device according to one of the preceding claims, **characterized in that** two or more radial chambers (3) that run parallel are arranged, axially in series, around the central region (4).

5. Device according to one of the preceding claims, **characterized in that** the density of the electrodes (11) per unit area on the first wall (1) varies in the radial direction.

6. Device according to one of the preceding claims, **characterized in that** all of the radial chambers (3) are arranged around a common, central gas feed (7), which is equipped with inner openings (18) issuing into the radial chambers, and are surrounded at the outside by a common housing (6) that delimits the collecting chamber (5).

7. Device according to one of the preceding claims, **characterized in that** the respective first wall (1) and the second wall (2) of two or more radial chambers (3) are arranged in a common cylindrical holder (14), such that two first walls (1) or two second walls (2) are formed together as a common first wall (1) or second wall (2) respectively.

8. Device according to either of Claims 6 and 7, **characterized in that** at least one electrical supply line (10) of the electrodes (11) is guided in an electrically insulated fashion through the housing (6) to the outside.

9. Device according to one of Claims 6 to 8, **characterized in that** all of the second walls (2) can be connected to ground by being electrically connected to the central gas feed (7) and/or to the housing (6).

## Revendications

1. Dispositif pour traiter un flux de gaz d'échappement (22) d'un moteur à combustion interne, avec au moins une chambre radiale (3) pouvant être parcourue radialement par le flux de gaz d'échappement (22) et qui s'étend radialement à partir d'une zone centrale (4) vers une chambre de collecte (5) extérieure,
la chambre radiale (3) étant limitée par une première paroi (1) en forme de disque et par une deuxième paroi (2) en forme de disque, une multiplicité d'électrodes (11) dirigées vers l'intérieur de la chambre radiale (3) dépassant de la première paroi (1), **caractérisé en ce que** les électrodes (11) et la deuxième paroi (2) en forme de disque peuvent être raccordées à une source haute tension (23) de telle sorte qu'un champ électrique peut être produit entre les électrodes (11) et la deuxième paroi (2).

2. Dispositif selon la revendication 1, **caractérisé en ce que** la première paroi (1) en forme de disque et la deuxième paroi (2) en forme de disque sont parallèles entre elles.

3. Dispositif selon la revendication 1 ou 2, **caractérisé en ce que** la première paroi (1) en forme de disque est formée d'un matériau (13) électriquement isolant avec des électrodes (11) électriquement conductrices qui sont fixées à l'intérieur et qui sont raccordées électriquement entre elles par des conducteurs électriques (12) situés dans ou sur le matériau (11) électriquement isolant.

4. Dispositif selon l'une des revendications précédentes, **caractérisé en ce que** deux chambres radiales (3) parallèles ou davantage sont disposées en se suivant axialement autour de la zone centrale (4).

5. Dispositif selon l'une des revendications précédentes, **caractérisé en ce que** la densité des électrodes (11) par unité de surface sur la première paroi (1) varie dans la direction radiale.

6. Dispositif selon l'une des revendications précédentes, **caractérisé en ce que** toutes les chambres radiales (3) sont disposées autour d'une amenée de gaz (7) centrale commune munie d'ouvertures intérieures (18) débouchant dans les chambres radiales et sont entourées extérieurement d'un boîtier (6) commun qui limite la chambre de collecte (5).

7. Dispositif selon l'une des revendications précédentes, **caractérisé en ce que** respectivement la première paroi (1) et la deuxième paroi (2) de deux chambres radiales (3) ou davantage sont disposées dans un élément de retenue (14) cylindrique commun de telle sorte que deux premières parois (1) ou deux deuxièmes parois (2) sont constituées conjointement en tant que première paroi (1) ou respectivement deuxième paroi (2) commune.

8. Dispositif selon l'une des revendications 6 ou 7, **caractérisé en ce qu'**au moins une ligne d'alimentation (10) électrique des électrodes (11) est guidée vers l'extérieur de façon électriquement isolée à travers le boîtier (6).

9. Dispositif selon l'une des revendications 6 à 8, **caractérisé en ce que** toutes les deuxièmes parois (2) peuvent être raccordées à la masse en étant raccordées électriquement à l'amenée de gaz (7) centrale et/ou au boîtier (6).
